Europäisches Patentamt

European Patent Office

Office européen des brevets

(11) Publication number: 0 286 245
A1

# (12) EUROPEAN PATENT APPLICATION

(21) Application number: 88302263.4

(51) Int. Cl.⁴: B60T 11/16 , F16B 9/02

(22) Date of filing: 16.03.88

(30) Priority: 21.03.87 GB 8706758

(43) Date of publication of application:
12.10.88 Bulletin 88/41

(84) Designated Contracting States:
DE ES FR GB IT

(71) Applicant: LUCAS INDUSTRIES public limited
company
Great King Street
Birmingham, B19 2XF West Midlands(GB)

(72) Inventor: Campbell, Roy
The Corner House 1, Marlbrook Lane
Bromsgrove Worcestershire(GB)
Inventor: Price, Anthony George
14, Meadow Lane Croesycieliog
Cwmbran Gwent, NP44 2EY Wales(GB)

(74) Representative: Waite, Anthony William et al
MARKS & CLERK Alpha Tower Suffolk Street
Queensway
Birmingham B1 1TT(GB)

(54) Cylinder flange formation servo-booster.

(57) A fabricated master cylinder has a metal pressure cylinder (1) and a surrounding flange body (2) formed by bending a metal strip transversely of its longitudinal axis to form a generally circular portion (15) surrounding the cylinder and a pair of loop formations (16) for the reception of fixing bolts (17) passed through the formations into a support (20). When the cylinder is fixed to the support, a flange (4) of the cylinder is trapped between the flange body and support. The flange body may, if required, be welded to the cylinder at a location outside the area swept by an internal piston (5).

FIG 1

## CYLINDER FLANGE FORMATION.

This invention relates to a method of making an assembly including a metal cylinder and a surrounding flange body, and also to such an assembly produced by application of the method and useful, for example, as the pressure cylinder of a vehicle hydraulic system master cylinder for brake or clutch actuation, the surrounding flange body then serving to mount the assembly on a vehicle.

In our published Patent Application No.2170289, we have described a method of forming an assembly of the aforesaid general kind in which the flange body is in the form of a generally plate-like pressing secured to the cylinder by way of a spacer interposed between the flange body and an abutment on the cylinder, the flange body being welded or otherwise secured to the spacer so that, in the welded version, the direct application of welding heat to the cylinder itself is avoided. This constitutes a satisfactory practical arrangement, but requires the use of three initially separate components and employs a relatively expensive pressing for the flange body.

An object of the present invention is to provide an improved method of making an assembly including a metal cylinder and surrounding flange body, which is more cost-effective to manufacture than our earlier proposal in that it requires a reduced number of components, and is generally simpler to manufacture and assemble.

According to the invention, a method of making an assembly including a metal cylinder and a surrounding flange body comprises forming the flange body as a strip of material having an arcuate formation generally matching the curvature of the cylinder outer surface, and at least one generally radially extending loop, and placing the flange body on the cylinder with the inner surface of said arcuate formation surrounding at least a part of the cylinder outer surface and said loop extending generally outwardly of the cylinder outer surface for mounting the assembly on a support by way of fixing means extending through said loop.

The cylinder may be provided with a flange in the region of its open end, in which case it is not strictly necessary to secure the flange body to the cylinder, since the assembly will be secured together when it is mounted on the support by said fixing means extending through said loop with the cylinder flange trapped between the flange body and support. It may, however, be preferred to secure the flange body to the cylinder, using welding or bonding techniques for example, both for security reasons and to facilitate transit of the assembly prior to its final fixing to a vehicle. Welding is preferably effected close to the open end of the cylinder away from the swept part of the cylinder bore. Alternatively, the flange body may be welded to a retainer disposed at the open end of the cylinder and serving to mount a protective boot which, in use, will surround an actuating rod of the cylinder.

From another aspect of the invention, a pressure cylinder assembly comprises a metal cylinder and a surrounding flange body, the flange body being a strip of material having an arcuate formation generally matching the curvature of the cylinder outer surface, of which it surrounds at least a part, and at least one generally radially outwardly extending loop through which fixing means may be passed to secure the assembly to a fixed support.

The invention will now be described, by way of example, with reference to the accompanying drawings in which:-

Figure 1 is a fragmentary side view, partly in cross-section, of part of one embodiment of a cylinder and flange body assembly of the invention, in the form of a master cylinder;

Figure 2 illustrates one form of flange body for use in the assembly of Figure 1;

Figure 3 is an end view of a twin master cylinder arrangement embodying the invention;

Figure 4 is a detail of a side view illustrating part of a modified arrangement;

Figure 5 is an end view, partly in cross-section, of a further twin cylinder arrangement embodying the invention;

Figure 6 is a cross section along the line C-C of Figure 5.

Figure 7 is an end view of a further twin-cylinder arrangement embodying the invention, and

Figure 8 is a cross-section along the line 8-8 of Figure 7 in the direction of the arrows.

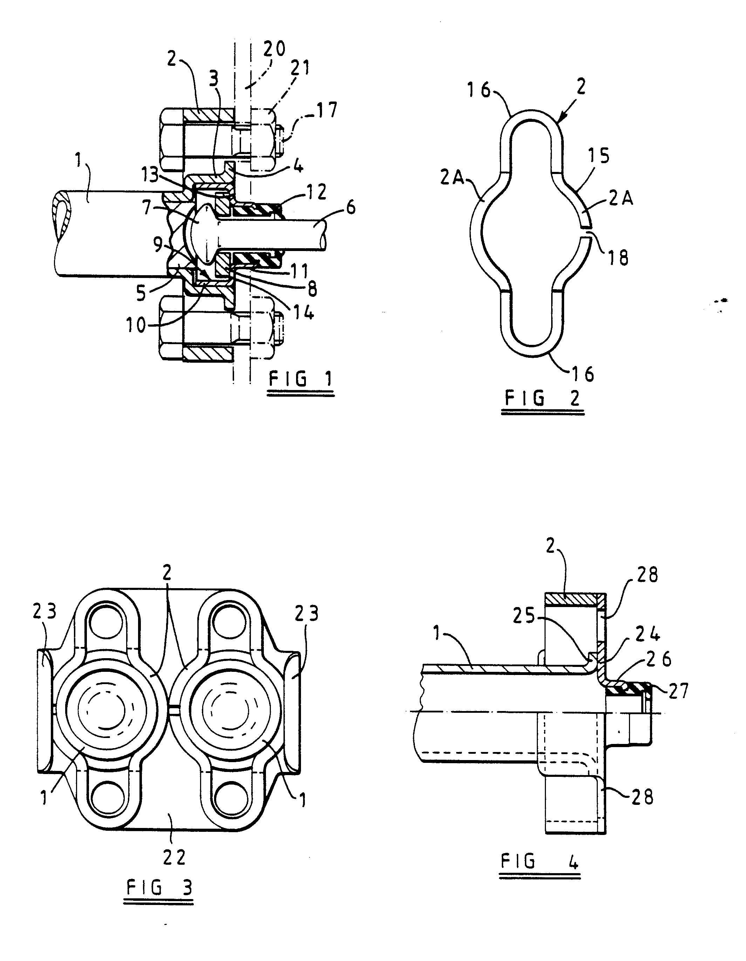

Referring to Figure 1 of the drawings, this shows part of a fabricated master cylinder assembly including a cylinder 1 and a surrounding flange body 2, the assembly being primarily for use in actuating a vehicle hydraulic clutch or braking system. The cylinder 1 is a drawn steel component, of which an end region is flared outwardly to form a portion 3 of larger diameter than the remainder, an extreme outer end part of the portion 3 being turned outwardly to form an abutment flange 4. The cylinder 1 contains a pressure piston, part of which can be seen at 5, the piston being actuated by a force input rod 6 having an enlarged head 7 disposed within the larger diameter cylinder portion 3. A retaining washer 8 is engaged behind the head 7 and enclosed within a generally cup-shaped rod retainer, indicated generally at 9 and having a cylindrical portion 10 press-fitted within the larger diameter cylinder portion 3. The retaining device 9 is stepped to provide a smaller diameter portion thereof 11 on to which is moulded a protective boot 12 for the rod 6, the generally radially extending portion 13 of the retainer between the smaller and larger diameter portions thereof providing an outwardly facing surface 14 flush with the axially outermost surface of the abutment flange 4, for the purpose to be described.

The flange body 2 can be seen in more detail in Figure 2. This is formed by bending a metal strip generally transversely of its longitudinal axis into a formation which includes a central generally circular relatively large portion 15 having a diameter such that it fits closely around the larger diameter cylinder portion 3. The flange body also includes a pair of generally diametrically opposed loop formations 16 dimensioned to receive bolts 17 therethrough, in the manner to be described. In its initial form, the free ends of the body 2 are not brought together, but spaced to leave a gap 18.

The flange body 2 is assembled on the cylinder 1 by passing it along the cylinder on to the larger diameter portion 3 of the latter, over which the portion 15 of the flange body fits closely, and into engagement with the flange 4. The generally circular portion of the body is recessed axially at 2A, as seen in Figure 2, by a distance corresponding to the thickness of the cylinder flange 4 so that the flange body is brought flush with the axially outer surface of the cylinder when engaged with the flange 4.

It is preferable, although not essential, to secure the flange body to the cylinder in order to form a permanent assembly. For this purpose, the flange body is compressed radially into close engagement with the cylinder portion 3 and this has the effect of substantially closing the gap 18. Welding between the cylinder and flange body is then effected at any suitable locations, which may include the abutting edges of the body at what was previously the gap 18, to secure the flange body to the cylinder.

Prior to fixing the master cylinder in its permanent operative position, as for example on a vehicle bulkhead 20, the force input rod 6 and its washer 14 and retainer 9 may be assembled into the open end of the cylinder in the positions shown, the retainer 9 being a press-fit within the enlarged cylinder end portion 3 so that the rod is retained sufficiently securely therein for transit purposes. The entire assembly may be offered to the bulkhead 20 from the left-hand side, as seen in the drawing, the rod 6 and boot 12 being inserted through an appropriate opening in the bulkhead 20 and the bolts 17 inserted through the portions 16 of the flange body and also through the bulkhead for reception of securing nuts 21, the flange body engaging the bulkhead by way of its axially facing peripheral edge. When the cylinder assembly is thus secured in position the flush face 14 of the retainer 9 engages the opposed wall of the bulkhead to react against the latter the return spring loads sustained by the rod when retracted.

Figure 3 illustrates an arrangement in which a pair of flange bodies 2 of Figure 2 are arranged to co-operate with a bridging plate 22 in securing together a pair of cylinders 1. The plate 22 is provided with a pair of holes sufficiently large to receive the cylinders therethrough, the plate being passed along the cylinders until it comes into engagement with the adjacent sides of the flange bodies 2. The plate 22 is provided with a pair of tongues 23 which are then bent inwardly around the sides of the flange bodies and over adjacent edge portions thereof so as to clamp the cylinders together and thereby form a twin-cylinder assembly. The assembly may be attached to a bulkhead in the manner described for the single cylinder in embodiment of Figure 1. The bent over tabs 23 permit the cylinder assembly to be dismantled in order to service internal components, such as seals, of the cylinders.

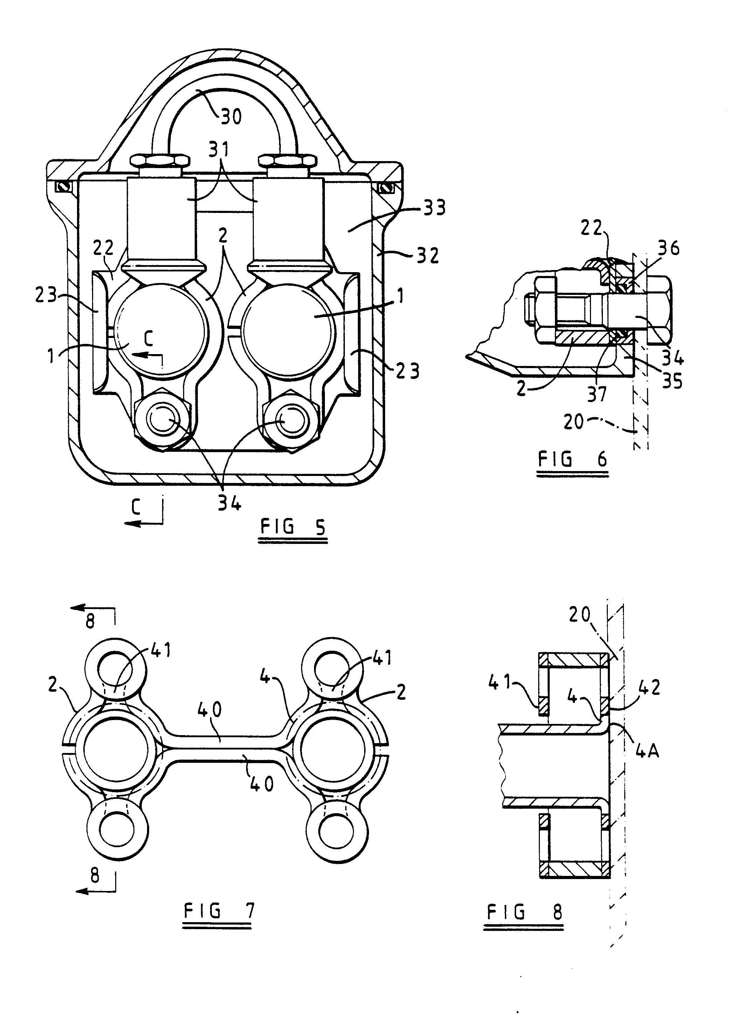

Figure 4 illustrates an alternative arrangement, applicable to twin or single master cylinder assemblies, in which the or each flange body 2 is welded to an end member 24, which may in turn be welded to an end flange 25 of the cylinder 1, thereby forming a permanent assembly which cannot be dismantled for servicing. The end member 24, in this embodiment, has a generally cylindrical portion 26 which acts to support a protective boot 27 for an actuating rod (not shown) the boot being conveniently moulded onto the portion 26. The retainer 24 may also form a backstop for return forces applied to the actuating rod, acting to transmit such forces directly to a fixed support, such as a bulkhead, to which the cylinder is secured in use by bolts passed through the flange member 2 and holes 28 formed in the retainer 24.

The arrangement illustrated in Figure 5 is generally similar to that of Figure 3 in that a pair of cylinders, illustrated in outline at 1, are provided with respective flange members 2 and interconnected by a bridging plate 22 which locks the cylinders together by way of turned over portions 23, as described in connection with Figure 3. The cylinders 1 are interconnected by a transfer pipe 30, flow through which is controlled by valve means of conventional construction conveniently housed within outlet port connections 31 mounted on the cylinders 1. The cylinder assembly, in this embodiment, is surrounded by a reservoir element 32 between which, and the outer surfaces of the cylinders 1, is formed a space 33 acting as a reservoir for hydraulic fluid.

Figure 6 illustrates the fixing details of the assembly of Figure 5 in the region of one of fixing bolts 34 thereof. It will be seen that each bolt 34 passes through a supporting bulkhead 20, the plate 22, flange body 2 and also through end wall 35 of the reservoir element so that all of these elements are clamped together by the bolts 34 against the bulkhead 20. An insert 36 containing a seal 37 ensures that there is no escape of fluid from the inside of the reservoir element past the bolts 34.

In the arrangement illustrated in Figures 7 and 8, two flange bodies 2 similar to that of Figure 2 are interconnected by a pair of webs 40. The bodies and webs may conveniently be made by deforming two pieces of metal strip, each forming a half of each flange body and a web interconnecting the halves, and securing the webs together by welding or by the insertion of fixing screws or the like (not shown) through holes formed in the webs. The flange bodies so formed serve to interconnect a pair of cylinders 1 by way of the webs 40. As can be seen from Figure 8, generally circular washers 41, 42 are secured around the flange bodies at either side thereof, as by welding for example. The washer 42 is of the same thickness as the flange 4 of the cylinder so as to fill the space left between the axial extremity of the flange body 2 and the plane of the outer surfaces 4A of the flange 4 and thereby provides a flush outer surface for presentation to a support 20 when the flange body is in position on the cylinder. This provides a convenient alternative to recessing the flange body at 2A and the washers provide added rigidity, when required.

The invention will be seen to provide a simple and inexpensive method of forming a cylinder and flange body assembly, which assembly may be readily and quickly assembled and secured in its final position of use on a vehicle.

## Claims

1. A method of making an assembly including a metal cylinder (1) and a surrounding flange body (2), characterised by the steps of forming the flange body (2) as a strip of material having an arcuate formation (15) generally matching the curvature of the cylinder outer surface, and at least one generally radially extending loop (16), and placing the flange body (2) on the cylinder (1) with the inner surface of said arcuate formation (15) surrounding at least a part of the cylinder outer surface and said loop (16) extending generally outwardly of the cylinder outer surface for mounting the assembly on a support (20) by way of fixing means (17) extending through said loop.

2. A method according to Claim 1 characterised by forming an outwardly projecting flange (4) in the region of the cylinder open end for abutment, in use, by the flange body (2).

3. A method according to Claim 1 or Claim 2 characterised by the step of securing the flange body (2) to the cylinder (1).

4. A method according to Claim 3 characterised by welding the flange body (2) to the cylinder (1) at a location away from the swept part of the cylinder bore.

5. A method according to any one of Claims 1 to 4 characterised in that the flange body (2) is formed from a single piece of material with an arcuate formation (15) of cylindrical shape and the free ends of the formation juxtaposed, the method including after assembly of the flange body (2) on the cylinder (1), deforming the formation (15) inwardly to bring said ends together.

6. A method according to Claim 5 characterised by forming the flange body (2) by bending a metal strip.

7. A method according to Claim 6, characterised by the step of welding said ends to each other.

8. A pressure cylinder assembly comprising a metal cylinder (1) and a surrounding flange body (2), characterised in that the flange body (2) is a strip of material having an arcuate formation (15) generally matching the curvature of the cylinder outer surface of which it surrounds at least a part, and at least one generally radially outwardly extending loop (16) through which fixing means (17) may be passed to secure the assembly to a fixed support (20).

9. A pressure cylinder according to Claim 8 characterised in that the cylinder (1) has an outwardly projecting flange (4) in the region of the cylinder open end against which the flange body (2) abuts.

10. A pressure cylinder according to Claim 8 or Claim 9 characterised in that the flange body (2) is a single piece of strip material bent transversely of its longitudinal axis to produce said arcuate formation (15) and loop (16).

11. A pressure cylinder according to Claim 10 characterised in that said strip is of metal and the juxtaposed free ends thereof are welded together.

12. A pressure cylinder according to any one of Claims 8 to 11 characterised in that a pair of generally parallel cylinders (1) are connected together by a bridging element (22) through which both cylinders extend, the cylinders being provided with respective flange bodies (2) which are disposed at the side of the bridging element (22) remote from the cylinders, the bridging element (22) having portions (23) deformed over axially facing outermost surfaces of the flange bodies (2).

13. A pressure cylinder according to any one of Claims 9 to 11 characterised in that the flange body (2) is rigidly secured to an end member (24) lying against the opposite side of the cylinder flange (4) to the flange body (2).

14. A pressure cylinder according to Claim 13 characterised in that said end member (24) carries a protective boot (27) surrounding a force input rod of the cylinder.

15. A pressure cylinder according to any one of Claims 12 to 14 characterised in that the or each cylinder (1) is surrounded in spaced relationship by a reservoir element (32) between which, and the outer surface of each cylinder, is formed a space (33) serving as a fluid reservoir.

16. A pressure cylinder according to Claim 15 characterised in that a radially extending part (35) of the reservoir element (32) lies over the axially outermost surface of the bridging element (22) and is clamped, in use, between that surface and a fixed support (20) mounting the cylinder (1).

17. A pressure cylinder according to Claim 8 characterised in that a pair of generally parallel cylinders (1) are interconnected by a pair of flange bodies which are formed by a pair of flange parts each providing a pair of half flange bodies (41) interconnected by a web (40) and partly surrounding the respective cylinders, said flange parts lying on opposite sides of the cylinders with the webs (40) joined together to interconnect the cylinders.

FIG 1

FIG 2

FIG 3

FIG 4

FIG 5

FIG 6

FIG 7

FIG 8

European Patent
Office

**EUROPEAN SEARCH REPORT**

Application Number

EP 88 30 2263

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 559 464 (T.W. ROBERG) * column 3, lines 39-64; figure 7 * | 1,3,6 | B 60 T 11/16 F 16 B 9/02 |
| Y | | 8-10,12 ,17 | |
| Y | GB-A-1 436 333 (AUTOMOTIVE PRODUCTS) * figure 5 * | 8-10,12 ,17 | |
| A | US-A-2 188 355 (G.H. HUNT) * figure 3 * | 1-11 | |
| A | DE-C- 654 012 (YZERHANDEL) * figures 7,8 * | 1,3,5 | |
| A | GB-A-1 601 937 (STROMBERG GREEST) * whole document * | 1-7 | |

TECHNICAL FIELDS
SEARCHED (Int. Cl.4)

B 60 T 11/00
F 16 B 9/00

The present search report has been drawn up for all claims

| Place of search | Date of completion of the search | Examiner |
|---|---|---|
| BERLIN | 14-07-1988 | KIESLINGER |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)